Europäisches Patentamt

European Patent Office

Office européen des brevets

(11) Publication number: **0 338 668**
**A2**

## EUROPEAN PATENT APPLICATION

(21) Application number: 89302134.5

(51) Int. Cl.⁴: **H04J 3/06**

(22) Date of filing: 03.03.89

(30) Priority: 21.04.88 GB 8809396

(43) Date of publication of application:
25.10.89 Bulletin 89/43

(84) Designated Contracting States:
BE DE ES FR GR IT LU NL SE

(71) Applicant: **GEC PLESSEY
TELECOMMUNICATIONS LIMITED**
**Telephone Works P.O. Box 53**
**Coventry, CV3 1HJ(GB)**

(72) Inventor: **Hunneyball, Timothy John**
**15 Barons Close**
**Gedling Nottingham(GB)**

(74) Representative: **Elliott, Frank Edward**
**The Plessey Company plc. Intellectual**
**Property Department Vicarage Lane**
**Ilford, Essex IG1 4AQ(GB)**

(54) **Frequency clock synchronisation.**

(57) An apparatus for frequency clock synchronisation between a trunk clock frequency and a local clock frequency wherein frequency comparison is made at the local clock frequency source by a frequency comparator (31) and a correction signal (39) is generated. The correction signal (39) is transmitted from the frequency comparator (31) to the local clock frequency source (33) through a common control bus (25).

*Fig. 1.*

## FREQUENCY CLOCK SYNCHRONISATION

The present invention relates to clock synchronisation and more particularly but not exclusively to synchronisation between remote digital exchanges and a central digital exchange.

A typical communications network may include a multitude of clock sources of nominally the same frequency ie. 2.048MHz. These clock sources provide clock and synchronisation pulses at their respective local system or communication function. In an ideal situation these clock sources would be perfectly synchronised in order to ensure accurate recovery of data and minimal data slippage.

Practical clock sources are however influenced by physical conditions such as temperature cycling of oscillator crystals, oscillator age and voltage controlled oscillator supply voltage drift. In addition typically short term frequency jitter is added to the problems of clock synchronisation. An aligner or elastic buffer may be used to compensate for sudden changes in clock frequency. Long term discrepancies in clock frequencies will however fill this buffer leading to data frame slipping and possible loss.

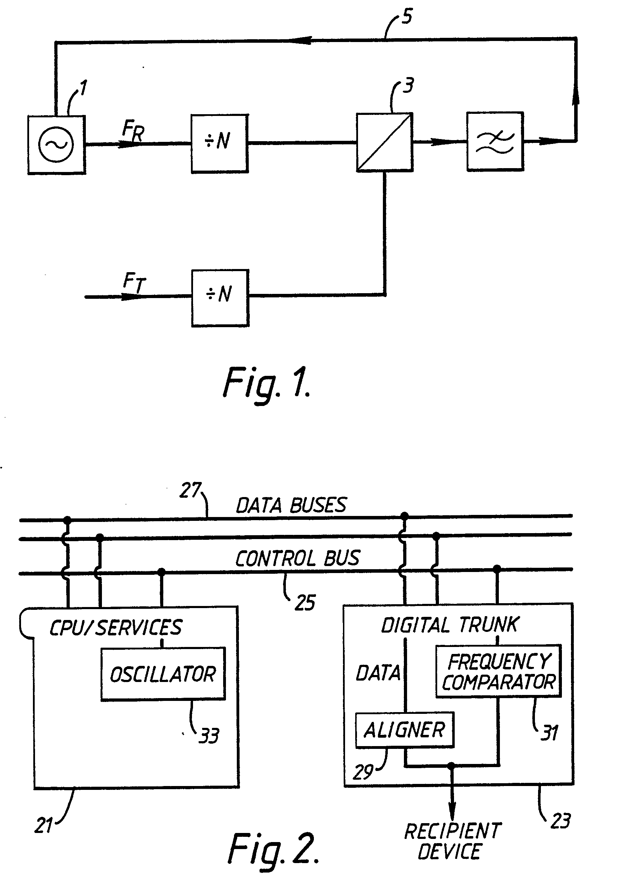

The conventional approach to adjusting clocks into synchronisation is illustrated in Figure 1. A voltage controlled oscilator (V.C.O) in the remote device 1 produces a local clock signal $F_R$ while a system trunk clock signal $F_T$ is produced by clock recovery from the digital trunk of a central exchange. Both the local clock $F_R$ and the trunk clock $F_T$ are divided in order that their respective phase can be conveniently compared in a phase comparator 3. The resultant signals from the phase comparator 3 are used in a feedback loop 5 to control or adjust the VCO 1. In such a way, the remote exchange clock and central exchange clock can be synchronised. As will be appreciated there is a time delay in establishing clock synchronisation. Consequently, it is usual to employ an aligner buffer and feedback loop sequencing apparatus to compensate for the delay in establishing synchronisation (this delay has the same effect as a short term change in frequency).

The conventional approach has problems in jitter removal from the incoming clock signal, in providing a smooth change of clock signals when changing sources and in synchronising two different sources together in order that the system may lock to the mean frequency of the two sources.

It is an objective of the present invention to provide clock synchronisation that substantially relieves these problems.

According to the present invention there is provided a signal frequency synchronisation arrangement wherein at least two signal frequency sources with a control link therebetween are synchronised, a first signal being defined as a primary signal and further signals being defined as adaptable signals, there being frequency comparison means adapted to compare the primary signal with each adaptable signal and further adapted to provide a correction signal for each adaptable signal source which correction signal is arranged to be transmitted to that source through the control link.

An embodiment of the present invention will now be described by way of example only with reference to the accompanying drawings in which:-

Figure 2 illustrates in schematic form an embodiment of the present invention; and

Figure 3 illustrates in block diagram form a control loop according to the embodiment illustrated in Figure 2.

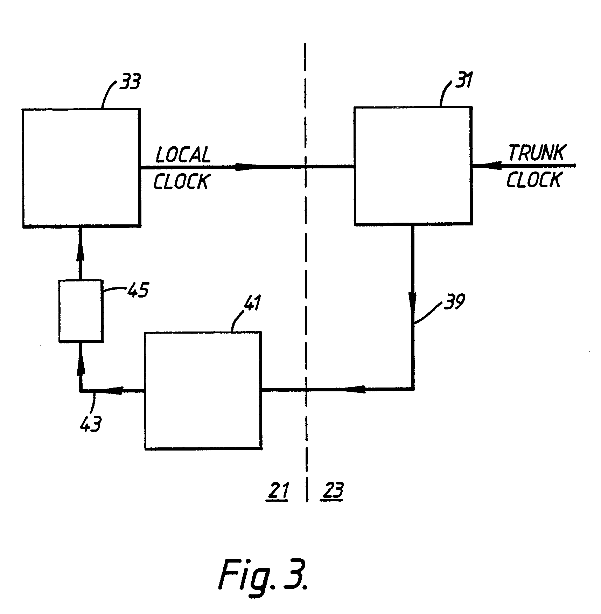

In Figure 2, a services circuit card 21 and digital trunk card 23 are illustrated, these cards (21, 23) being connected by a control bus 25 and data buses. The control bus may be a high level data link control arrangement.

An aligner buffer 29 provides storage space to accomodate short term differences between the incoming data rate governed by the trunk clock frequency and the local clock frequency generated for recovering of the data and correct time forming. The aligner 29 is typically of a size sufficient to store several frames of data. It will however be appreciated, that long term consistent differences in trunk clock frequency and local clock frequency eventually saturate the buffer making it inoperative. With the aligner inoperative, regular data frame slips and repeat data requests occur. In order to prevent such frame slip/repeats the trunk and local clock frequencies are synchronised. The speed with which such clock frequency synchronisation must occur is dependent upon the size of the aligner buffer 29 employed.

In the present invention, frequency comparison between the data rate present at the trunk card 23, from a remote system and a locally produced clock frequency signal produced by an oscillator 33 on the services card 21, is carried out by a frequency comparator 31 on the trunk card 23. Any clock frequency differences are constituted as a correction signal or clock adjustment message which is sent via the control bus 25 to the services card 21. The correction signal adjusts the output clock frequency of the oscillator 33. As will be appreciated, the correction signal can be interleaved with other control data signals. As a consequence no additional fixed wiring is required and the arrangement can be adapted to accomodate a multitude of different clock frequency sources. Normally, local clock frequency sources will be adjusted to the input data rate which in turn is determined by the system master clock rate. A typical clock frequency signal rate would be 2.048 MHz.

A block diagram of an arrangement for controlling the oscillator 33 of the serivces card 21 is illustrated in figure 3. The local clock frequency generated by oscillator 33 and the trunk clock frequency are compared in frequency comparator 31. Discrepancies between the clock frequencies are determined and an appropriate correction signal 39 generated. Typically, the correction signal will be in digital code and consequently can be interleaved conveniently onto the control bus. An accumulator module 41 on the services card 21 provides an adjustment signal 43 usually in the form of a digital word. This takes the form of software coding on the services card. It will be possible to influence this accumulator simultaneously from more than one trunk. Conventionally, the oscillator 33 is a voltage controlled oscillator (V.C.O). Thus the adjustment signal 43 is converted to an analogue signal by a digital to analogue converter (D.A.C.) 45 prior to application at the oscillator.

As stated previously, the time available for clock synchronisation is dependent upon the aligner buffer 29 storage size. Factors affecting the speed of clock frequency synchronisation include:-

1. The sampling rate of the frequency comparator 31, typically of the order of 500 Hz; and ,

2. The delay time (polling rate) for correction signals to reach the oscillator 33 through the controlling arrangement. A practical delay time (polling rate) envisaged for the present invention is approximately 40 mS ie an effective sampling rate of 25Hz. As will be appreciated, the causes of clock frequency drift are slow acting ie temperature, ageing etc consequently such a relatively long delay time is easily accomodated.

In respect of the aligner buffer 29 size, if a frame of data is considered to be 256 bits long, then after 1s, with a clock frequency difference of 100 parts per million, the buffer will have gained or lost 204.8 bits of data. Typically, aligner buffers 29 are one or two frames long thus giving more than 2 seconds of buffer time with such a clock frequency difference.

It will be appreciated that when more than two local clock frequency sources are to be synchronised, it is possible that, by using a correct switching hierachy of master modes, these local clock frequency sources could be synchronised in a cascade mode from each other. In addition, automatic re-synchronisation and recalibration could be programmed into the arrangement. It should be understood that a local clock frequency source could be made the master source for a networked system.

Although the present invention has been described with reference to clock frequency signals it will be appreciated that any frequency signals that require synchronisation and have a control bus between their sources could employ the present invention.

## Claims

1. A signal frequency synchronisation arrangement for synchronising a primary signal source arranged to provide primary signals and at least one adaptable signal source (33) arranged to provide adaptable signals, the primary signal source and each adaptable signal source (33) being connected by control link means (25), the arrangement characterised in that frequency comparison means (31) are arranged to compare the primary signals with adaptable signals of each adaptable signal source (33) to provide a respective correction signal (39), the frequency comparison means (31) being coupled to the control link means (25) to enable the respective correction signal (39) to be sent to the respective adaptive signal source (33) to synchronise that adaptive signal source (33) to the primary signal source.

2. An arrangement as claimed in claim 1 wherein the control link is a high level data link.

3. An arrangement as claimed in claim 1 or 2 wherein the primary signal has a frequency of 2.048 MHz.

4. An arrangement as claimed in any preceding claim wherein the primary signal is a trunk system clock signal and the adaptable signals are clock signals generated at local devices of the system.

5. An arrangement as claimed in any preceding claim wherein the adaptable signals are generated by a voltage controlled oscillator.

**Fig. 1.**

**Fig. 2.**

LOCAL
CLOCK

TRUNK
CLOCK

33

31

45

41

39

43

21 | 23

Fig. 3.